# EUROPÄISCHE PATENTSCHRIFT

(11) **EP 0 652 811 B1**
(45) Veröffentlichungstag und Bekanntmachung des Hinweises auf die Patenterteilung: **27.12.1996**
(21) Anmeldenummer: 93915650.1
(22) Anmeldetag: 19.07.1993
(51) Int. Cl.: B09B 5/00, H01M 10/54

(54) **VERFAHREN ZUR RÜCKGEWINNUNG VON ROHSTOFFEN AUS VORSORTIERT GESAMMELTEM, VERBRAUCHTEM GUT, INSBESONDERE AUS VERBRAUCHTEN ELEKTROCHEMISCHEN BATTERIEN UND AKKUMULATOREN**
PROCESS FOR THE RECOVERY OF RAW MATERIALS FROM PRESORTED COLLECTED WASTE, ESPECIALLY SCRAP ELECTROCHEMICAL BATTERIES AND ACCUMULATORS
PROCEDE DE RECUPERATION DE MATIERES PREMIERES PROVENANT DE PRODUITS USAGES, COLLECTES ET PRETRIES, NOTAMMENT DE PILES ELECTROCHIMIQUES ET D'ACCUMULATEURS USAGES

(30) Priorität: 28.07.1992 DE 4224884
(43) Veröffentlichungstag der Anmeldung: 17.05.1995
(73) Patentinhaber: BATENUS UMWELT- UND RECYCLINGTECHNOLOGIE GmbH & Co. KG, D-79780 Stühlingen (DE)
(72) Erfinder: LINDERMANN, Walter, CH-8225 Sibligen (CH)
(74) Vertreter: Becker, Maria, Dipl.-Phys.
(86) Internationale Anmeldenummer: DE9300644
(87) Internationale Veröffentlichungsnummer: WO9402265

(56) Entgegenhaltungen:
- EP-A-00 425 045
- EP-A-00 433 654
- FR-A-02 609 651
- CHEMICAL ABSTRACT VOLUME 106 NO 16, PUBLISHED ON 1987, 20 APRIL, ( COLOMBUS OHIO USA) AOKI H. ET AL. "RECOVERY OF METALS FROM SPENT DRY BATTERIES.", PAGE 239, COLUMN 2, ABSTRACT NO 123550U

## Beschreibung

Die Erfindung betrifft ein Verfahren zur Rückgewinnung von Rohstoffen aus vorsortiert gesammeltem, verbrauchtem Gut, insbesondere aus verbrauchten elektrochemischen Batterien und Akkumulatoren.

Elektrochemische Batterien sind heutzutage als praktische, mobile Energiequellen aus dem täglichen Leben nicht mehr wegzudenken, da die Verwendung von netzunabhängigen Elektrogeräten ständig zunimmt. Mit der Zunahme und immer häufigeren Benutzung von derartigen Elektrogeräten steigt auch der Verbrauch an Batterien, so daß immer mehr verbrauchte alte Batterien anfallen und entsorgt oder einer Wiederverwertung zugeführt werden müssen.

Die am meisten verwendeten Batterien sind Zink-Kohle- und Alkali-Mangan-Batterien. Daneben werden wiederaufladbare Nickel-Cadmium-Akkumulatoren verwendet. Außerdem werden Quecksilber-Knopfbatterien dort eingesetzt, wo beispielsweise wie in Uhren und Fotoapparaten, besonders kompakte Energiequellen benötigt werden.

Die Batterien enthalten neben wertvollen Materialien wie z.B. Nickel und Cadmium, auch giftige Substanzen, wie z.B. Quecksilber, die nicht in die Umwelt gelangen sollten.

Um zu vermeiden, daß giftiges Quecksilber in den Müll gelangt, bemüht sich die Industrie seit längerem, den Quecksilbergehalt in Batterien zu verringern. Obwohl hierbei bereits beachtliche Fortschritte gemacht wurden, enthalten insbesondere Zink-Kohle- und Alkali-Mangan-Batterien noch geringe Mengen an Quecksilber, die sich jedoch bei der großen Gesamtmenge von verbrauchten Batterien beträchtlich summieren. So gelangen aus den jährlich verbrauchten Haushaltsbatterien, das sind ca. 230 Mio Stück Zink-Kohle-Batterien und ca. 200 Mio. Stück Alkali-Mangan-Batterien, immer noch ca. 1,5 to Quecksilber jährlich in den Hausmüll.

Neben diesem Umweltschutzaspekt erscheint es aber auch zweckmäßig, die in den Batterien enthaltenen Wertstoffe nicht einfach in den Müll zu geben, sondern zurückzugewinnen, so daß diese Wertstoffe wieder in geeigneter Weise in Produktionsprozessen verwendet werden können.

Während Blei-Akkumulatoren, wie sie beispielsweise in Kraftfahrzeugen verwendet werden, und industriell eingesetzte Nickel-Cadmium-Batterien bereits nahezu vollständig einer Wiederverwertung zugeführt werden, gibt es für Haushaltsbatterien noch kein geeignetes Verfahren zur Rückgewinnung der in den Batterien vorhandenen Rohstoffe.

Auf dem 7. Internationalen Technischen Symposium "Batterie-entsorgung und Batterierecycling" des Fachverbandes Batterien im ZVEI im März 1991 in München wurde ein Recycling-Verfahren für Nickel-Cadmium-Akkumulatoren vorgestellt, das nach der naß-chemischen Methode arbeitet. Für dieses Recycling-Verfahren müssen zunächst die Nickel-Cadmium-Batterien aus den gesammelten Altbatterien aussortiert werden. Anschließend werden die Batterien geschreddert. Bei einer Vorbehandlung werden Schrott und Kunststoffe aus dem geschredderten Batteriematerial herausgeholt und mit Salzsäue gewaschen. Das restliche Batterienmaterial wird ausgelaugt, wobei die zum Waschen verwendete Salzsäurelösung diesem Verfahrensschritt zugeführt wird. Nach einem Filtern wird die beim Auslaugen entstandene Lösung einer naß-chemischen Aufbereitung zugeführt, wobei Nickel und Cadmium ebenfalls durch Elektrolyse abgetrennt werden.

Nachteilig bei diesem bekannten Verfahren ist es, daß ausschließlich Nickel-Cadmium-Batterien verwertet werden können, was ein aufwendiges Sortierverfahren für die gesammelten Batterien erforderlich macht.

Bei einem auf demselben Symposium vorgestellten Recycling-Verfahren für Braunsteinzellen (Zink-Kohle- und Alkali-Mangan-Batterien) werden zunächst aus den gesammelten Batterien Nickel-Cadmium-Akkumulatoren aussortiert. Nach dem Öffnen und Abtrennen der Stahlmäntel wird Quecksilber in einem Drehtrommelofen bei 400°C bis 600°C verdampft, wobei die Destillationsrückstände einer Kühltrommel zur Quecksilbergewinnung zugeführt werden. Das verbleibende Material wird zunächst gebrochen, um anschließend Eisenteile mittels Magnetabscheidung herauszuholen. Es verbleibt ein Gemisch aus Zink und Mangan, das in dieser Form jedoch nicht weiterverwendbar ist.

Nachteilig bei diesem Verfahren ist es, daß die Rückgewinnung von Zink und Braunstein aus dem Zink-Mangan-Gemisch sowie das korrekte Sortieren der Altbatterien nicht gelöst werden konnte.

Zur Zeit ist die Wiederverwertung von Haushaltsbatterien ohne eine spezielle Sortierung nicht möglich. Daher wurde auf dem genannten Symposium die Empfehlung gegeben, verbrauchte Haushaltsbatterien mit Ausnahme von verbrauchten Akkumulatoren einfach in den Hausmüll zu geben und nicht zu sammeln, da gesammelte Batterien sonst als Sondermüll entsorgt werden müssen, aber nicht einer Wiederverwertung zugeführt werden können.

Davon ausgehend, liegt der Erfindung die Aufgabe zugrunde, ein Verfahren der eingangs genannten Art zu schaffen, das es insbesondere ermöglicht, aus einem unsortierten Gemisch von verbrauchten Batterien und Akkumulatoren die darin enthaltenen Wert- oder Rohstoffe in wirtschaftlich verwendbarer Weise rückzugewinnen.

Erfindungsgemäß wird diese Aufgabe durch das Verfahren nach Anspruch 1 gelöst.

Erfindungsgemäß werden also die gesammelten Altbatterien und verbrauchten Akkumulatoren zunächst mechanisch in eine Grob- und eine Feinfraktion aufgeteilt, wobei die letztere im wesentlichen das zerkleinerte Elektrolytmaterial der Batterien enthält. Aus der Feinfraktion werden dann die rückzugewinnenden Stoffe schrittweise mit einer ersten und einer zweiten Lösung herausgelöst, um anschließend aus den beiden Lösungen zurückgewonnen zu werden.

Auf diese Weise wird es ermöglicht, ein Gemisch verschiedenster Elektrolyten aus unterschiedlichen Batterien so aufzubereiten, daß die darin enthaltenen Rohstoffe in einer guten, vermarktungsfähigen Form zurückgewonnen werden können.

Insbesondere ermöglicht das erfindungsgemäße Verfahren die Wiederverwertung von Batterierohstoffen, ohne daß diese in aufwendiger Weise vorsortiert werden müssen. Damit eignet sich das Verfahren insbesondere auch für die Wiederverwertung von verbrauchten Haushaltsbatterien, die damit vom Verbraucher unsortiert gesammelt und einer Wiederverwertung zugeführt werden können.

Entsprechend dem Anspruch 2 werden aus dem gesammelten Gut, also aus den gesammelten Altbatterien, Fremdmaterialien vor dem Verspröden der Batterien durch Kühlen aussortiert. Hierbei können insbesondere auch hoch quecksilberhaltige Knopfzellen aussortiert und einer externen Quecksilber-Rückgewinnung zugeführt werden.

Das Aussortieren von Quecksilberknopfzellen ist dabei auf einfache Weise möglich, da sich diese von den restlichen Batterien deutlich in ihrer Form und Größe unterscheiden.

Praktische Ausgestaltungen der Erfindung sind in den Ansprüchen 3 bis 6 beschrieben.

Das erfindungsgemäße Kühlen der Altbatterien mittels flüssigem Stickstoff auf sehr tiefe Temperaturen hat neben der gewünschten Versprödung des zu verarbeitenden Gutes den Vorteil, daß die Dampfdrücke der einzelnen Elektrolytmaterialien deutlich erniedrigt werden, so daß praktisch keine giftigen Stoffe, wie z.B. Quecksilber, abgasen können. Außerdem wird durch den flüssigen Stickstoff, der beim Abkühlen verdampft, eine Schutzgas-Atmosphäre geschaffen, wodurch eine sichere Verarbeitung ermöglicht wird. Ein weiterer Vorteil des Abkühlens mit flüssigem Stickstoff ist darin zu sehen, daß auch nicht vollständig entladene Batterien, die immer wieder in die gesammelten Altbatterien gelangen, bei der mechnischen Aufbereitung nicht zu Inertreaktionen führen können.

Die Aufteilung des mechanisch aufbereiteten Materials in eine Grob- und eine Feinfraktion läßt sich auf besonders einfache Weise entsprechend Anspruch 7 durch Sieben erreichen.

Um auch Elektrolytmaterialien, die an den in die Grobfraktion gebrachten Batteriemänteln haften bleiben, weiterverwerten zu können, wird die Grobfraktion entsprechend Anspruch 8 gewaschen.

Die weitere Auftrennung der Grobfraktion in marktfähige Rohstoffe wird entsprechend den Ansprüchen 9 und 10 durchgeführt.

Die Weiterbildungen der Erfindung nach Anspruch 11 und 12 ermöglichen ein besonders gutes Lösen der Feinfraktion.

Eine besonders vorteilhafte Ausgestaltung der Erfindung ist im Anspruch 13 beschrieben. Dabei wird entsprechend Anspruch 14 Vorzugsweise Schwefeldioxyd der als zweitem Lösungsmittel dienenden Schwefelsäure beigefügt, um auch das ansonsten nicht lösliche Mangandioxyd lösen und der Rückgewinnung zuführen zu können.

Hierbei wird erreicht, daß praktisch nur in dem Elektrolytmaterial der Batterien enthaltenes Graphit als unlöslicher Feststoff zurückbleibt, das damit in so hoher Reinheit vorliegt, daß es sich wirtschaftlich vermarkten läßt. Die restlichen Wertstoffe, insbesondere Schwermetalle, sind dann gelöst und können einzeln aus der Lösung abgetrennt werden.

Dabei ist es wesentlich, daß entsprechend Anspruch 15 aus beiden Lösungen die Quecksilber-Ionen als erste abgetrennt werden und damit die weiteren Abtrennschritte für die übrigen Schwermetall-Ionen nicht mehr nachteilig beeinflussen können.

Weitere zweckmäßige Ausgestaltungen der Erfindung sind in den Ansprüchen 16 bis 32 beschrieben.

Besonders zweckmäßig ist es, wenn die einzelnen Schwermetallionen in der in Anspruch 33 angegebenen Reihenfolge zurückgewonnen werden, bevor MnO₂ durch Elektrolyse abgetrennt werden, da hierdurch der gegenseitige Einfluß der Schwermetallionen auf die einzelnen Abtrennschritte minimiert wird.

Das erfindungsgemäße Verfahren arbeitet also zur Aufbereitung des Elektrolytmaterials aus den Batterien mit rein hydrometallurgischen Verfahrensschritten und ermöglicht es, die einzelnen Rohstoffe mit einer hohen Reinheit zurückzugewinnen, die deren direkte Rückführung in den Produktionsprozeß ermöglicht.

Ferner kann das erfindungsgemäße Verfahren standortungebunden durchgeführt werden, da keine thermischen Immissionen auftreten und die Prozeßwässer im Verfahren im Kreislauf geführt werden können. Dies wird insbesondere durch die abschließende Vollentsalzung und die bipolare Elektrodialyse der entsprechenden Flüssigkeiten erreicht.

Die Erfindung wird im folgenden beispielsweise anhand der Zeichnung näher erläutert; in dieser zeigt:

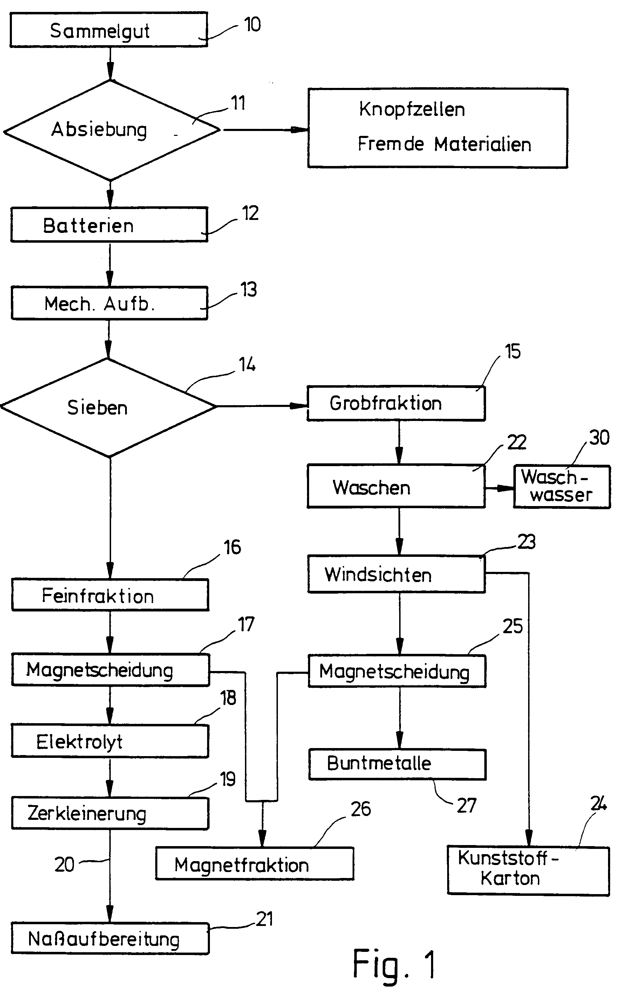

- Figur 1: ein vereinfachtes, schematisches Ablaufdiagramm der mechaischen Aufbereitung von gesammeltem Gut,
- Figur 2: ein vereinfachtes, schematisches Ablaufdiagramm einer naß-chemischen Aufbereitung einer bei der mechanischen Aufbereitung gewonnenen Feinfraktion,
- Fig. 3-8: vereinfachte, schematische Ablaufdiagramme der Abtrennungs-Schritte 1-6 der naß-chemischen Aufbereitung nach Fig. 2, und
- Figur 9: eine schematische Darstellung einer bipolaren Elektrodialyse, wie sie zusammen mit der naß-chemischen Aufbereitung nach Fig. 2 verwendet wird.

In den verschiedenen Figuren der Zeichnung sind einander entsprechende Verfahrensschritte und Stoffströme mit gleichen Bezugszeichen bezeichnet.

Ein Sammelgut 10, das sich aus verbrauchten Altbatterien, wie sie insbesondere bei der Verwendung im Haushalt anfallen, wird zunächst einer Absiebung 11 zugeführt, wodurch Knopfbatterien, die sehr quecksilberhaltig sind, und andere Fremdmaterialien von den der Wiederverwertung zuzuführenden Batterien 12 getrennt werden. Hierdurch wird der Hauptanteil an Quecksilber aus dem Sammelgut 10 entfernt, da in den restlichen der Wiederverwertung zuzuführenden Batterien 12 jeweils nur wenig Quecksilber enthalten ist.

Die abgeschiedenen, hoch quecksilberhaltigen Knopfbatterien werden einer gesonderten Quecksilber-Rückgewinnung zugeführt.

Die aus dem Sammelgut 10 aussortierten Batterien 12 werden bei einer mechanischen Aufbereitung 13 zunächst auf sehr tiefe Temperaturen abgekühlt und dadurch versprödet. Für die Abkühlung und Versprödung wird vorzugsweise flüssiger Stickstoff verwendet, so daß die Batterien 12 auf Temperaturen zwischen -200°C und -100°C abgekühlt werden können. Die abgekühlten Batterien werden dann aufgebrochen, z.B. durch Schreddern und anschließendes Prallen, wodurch die Batteriemäntel und andere metallische Bestandteile der Batterien vom Elektrolyten der Batterien, also von deren elektrochemischem Element gelöst werden.

Diese mechanische Aufbereitung 13 erfolgt, wie auch die übrigen mechanischen Verfahrensschritte, ohne gezielte Erwärmung des zu verarbeitenden Materials, was den Vorteil hat, daß aus dem Elektrolytmaterial der Batterien keine gefährlichen Stoffe abgasen können, da bei diesen tiefen Temperaturen die entsprechenden Dampfdrücke der Stoffe sehr niedrig sind. Die Verwendung von flüssigem Stickstoff zur Kühlung der Batterien 12 hat weiter den Vorteil, daß der Stickstoff eine Schutzgasatmosphäre bildet, in der die mechanische Aufbereitung 13 stattfindet.

Die vorgesehene Kühlung auf sehr tiefe Temperaturen verhindert darüber hinaus, daß Inertreaktionen von nicht vollständig entladenen Altbatterien stattfinden können.

Das in der beschriebenen mechanischen Aufbereitung 13 aufgebrochene und zerkleinerte Batteriematerial wird anschließend durch Sieben 14 in eine Grob- oder Schrottfraktion 15 und eine Feinfraktion 16 aufgeteilt. Die Grobfraktion 15 umfaßt dabei die Batteriemäntel, während die Feinfraktion 16 im wesentlichen aus dem Elekrolyten gebildet wird. Durch Magnetscheidung 17 werden beim Sieben 14 nicht erfaßte magnetische Metallbestandteile der Feinfraktion vom Elektrolyt 18 getrennt, der anschließend einer Zerkleinerung 19 unterzogen wird.

Bei der Zerkleinerung 19 wird der Batterieinhalt, also der Elektrolyt 18, durch eine Kombination von unterschiedlichen Walzenbrechern und Siebeinrichtungen in ein Pulver mit definierter Korngröße zerkleinert. Dieses zerkleinerte Elektrolyt-Pulver wird dann einer chemischen Naß-Aufbereitung 21 zugeführt.

Die beim Sieben 14 abgetrennte Grobfraktion wird einer Schrottwäsche (Waschen 22) mit vollentsalztem Wasser unterzogen, um die Batteriemäntel sowie die anderen Bestandteile der Grobfraktion 15 von daran anhaftendem Elektrolytmaterial zu reinigen. Anschließend wird die gewaschene Grobfraktion durch Windsichten 23 von leichten Bestandteilen wie Kunststoff und Karton 24 befreit, so daß praktisch nur noch metallische Bestandteile der Batterien nach dem Windsichten in der Grobfraktion verbleiben. Diese wird dann durch Magnetscheidung 25 in eine Magnetfraktion 26 und Buntmetalle 27 aufgeteilt. Der Magnetfraktion 26 werden dabei auch die durch die Magnetscheidung 17 aus der Feinfraktion abgetrennten magnetischen Metalle zugeführt.

Die Batteriemäntel werden auf diese Weise in marktfähige Rohprodukte getrennt.

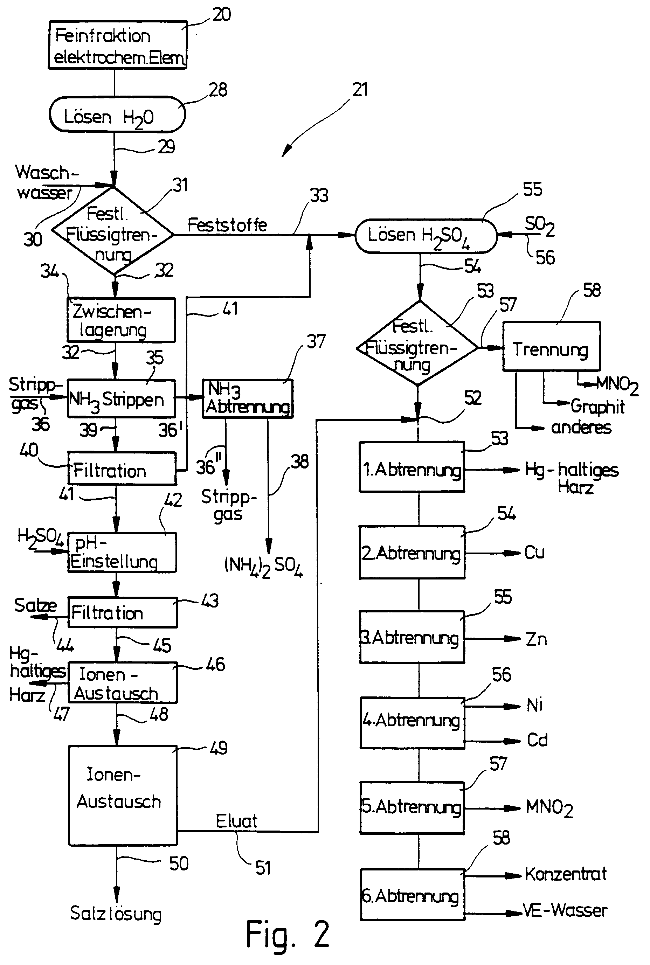

Wie Fig. 2 zeigt, wird das auf eine definierte Korngröße zerkleinerte Elektolytpulver 20 bei der chemischen Naßaufbereitung 21 zum Lösen 28 der wasserlöslichen Stoffe mit vorzugsweise vollentsalztem Wasser gemischt. Hierbei entsteht eine erste Suspension 29, der das beim Waschen der Grobfraktion 15 anfallende Waschwasser 30 zugeführt wird. Anschließend wird bei einer Fest/Flüssig-Trennung 31 die erste Suspension 29 in eine erste Lösung 32 und in nicht wasserlösliche Feststoffe 33 aufgetrennt. Die wässrige, erste Lösung 32 wird dann nach einer Zwischenlagerung 34, durch die Konzentrationsschwankungen abgepuffert werden, einem NH₃-Strippen 35 unterzogen. Dabei wird das Strippgas 36 mit der wässrigen ersten Lösung 32 in innigen Kontakt gebracht. Das NH₃-angereicherte Strippgas 36' wird anschließend in einer NH₃-Abtrennung 37 vom NH₃ getrennt, wobei ein wiederverwendbares sauberes Strippgas 36'' und Ammoniumsulfat 38 entsteht.

Aus der nach dem NH₃-Strippen 35 vorliegenden Lösung 39 ausfallende Salze werden durch eine Filtration 40 abgetrennt und als Stoffstrom 41' den Feststoffen 33 zugeführt.

Nach der Filtration 40 liegt eine NH₃-freie Lösung 41 vor, die nach einer pH-Einstellung 42 mittels Säure, vorzugsweise mittels Schwefelsäure, einer weiteren Filtration 43 unterzogen wird.

Die bei der Filtration 43 abfiltrierten Salze 44 werden abgeführt und vorzugsweise einer bipolaren Elektrodialyse zugeführt.

Nach der Filtration liegt eine NH₃- und feststofffreie wässrige Lösung 45 vor, die den geeigneten pH-Wert besitzt, um beim folgenden Ionenaustausch 46 selektiv vom Quecksilber 47 befreit zu werden. Die Hg-freie Lösung 48 wird in einem weiteren Ionenaustauschprozeß 49 von den restlichen Kationen befreit. Der Ionenaustauschprozeß 49, dem in Üblicher, jedoch der Übersichtlichkeit halber nicht dargestellter Weise Waschwässer und Regenerationslösung zugeführt werden, liefert zum einen eine Salzlösung 50, die die chloridischen Salze von nicht ausgetauschten Alkalimetallen umfaßt, und zum anderen ein Eluat 51, das hauptsächlich Schwermetallsulfate enthält. Die Salzlösung 50 wird in einer bipolaren Elektrodialyse in die konjugierende Säure und Lauge aufgespalten.

Das Eluat 51 wird einer zweiten Lösung 52 zugeführt, welche durch eine zweite Fest/Flüssig-Trennung 53 einer zweiten Su pension 54 erhalten wird, welche durch Lösen 55 der Feststoffe 33 und der bei der Filtration 40 abfiltrierten Salze erzeugt wird.

Das Lösen 55 der Feststoffe 33 und Salze 41 erfolgt vorzugsweise in zwei Schritten mit Schwefelsäure, wobei bei beiden Lösungsschritten Schwefeldioxyd 56 eingeleitet wird, um Mangandioxyd reduzierend zu lösen.

Die bei der Fest/Flüssig-Trennung 53 aus der beim Lösen 55 gebildeten sauren Suspension 54 abgetrennten Feststoffe 57 bestehen in erster Linie aus Graphit, der durch eine Trennung 58 von geringen Mengen anderer fester Bestandteile befreit und in seiner Qualität weiter erhöht wird.

Die zweite, saure Lösung 52 wird zusammen mit dem sauren Eluat 51 nacheinander einer ersten Abtrennung 53 zum Abtrennen von Quecksilber, einer zweiten Abtrennung 54 zum Abtrennen von Kupfer, einer dritten Abtrennung 55 zum Abtrennen von Zink, einer vierten Abtrennung 56 zum Abtrennen von Nickel und Cadmium, einer fünften Abtrennung 57 zum Abtrennen von Mangandioxyd und einer sechsten Abtrennung 58 zum Abtrennen eines Konzentrats von restlichen Schwermetall-Ionen und zum Zurückgewinnen von Wasser, insbesondere von vollentsalztem (VE) Wasser unterzogen, wobei das erhaltene VE-Wasser in Verfahren wieder verwendet wird.

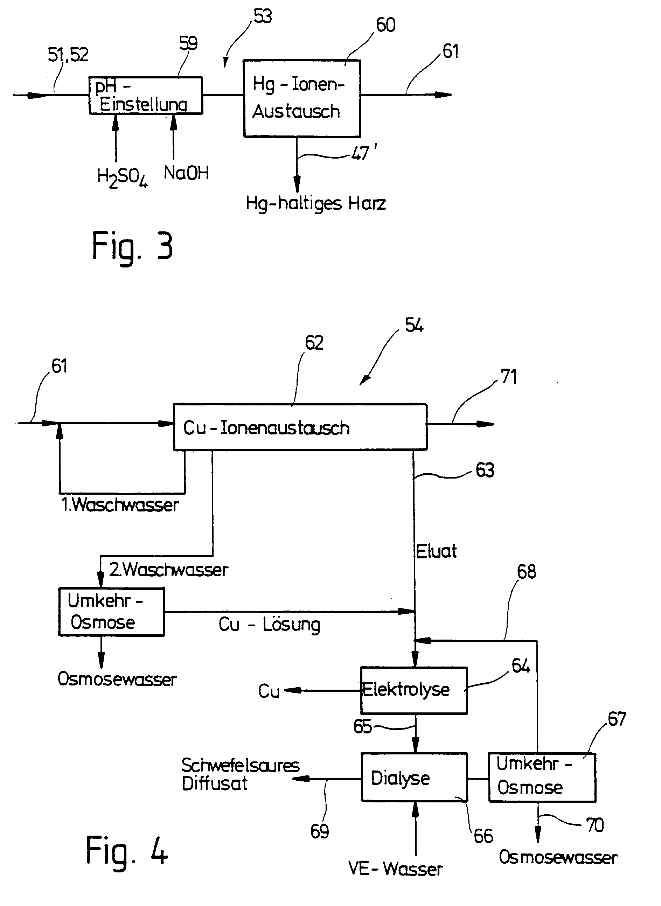

Die einzelnen Abtrennungen werden im folgenden anhand der Figuren 3 bis 8 näher erläutert.

Wie Fig. 3 zeigt, werden die saure Lösung 52 und das Eluat 51 einer pH-Einstellung 59 mittels Lauge und gegebenenfalls Säure unterzogen und anschließend einem Ionenaustauschprozeß 60 zugeführt, bei welchem selektiv Quecksilber-Kationen ausgetauscht werden. Auf diese Weise wird eine Hg-frei, zweite Lösung 61 erzeugt.

Für den Quecksilber-Ionenaustausch 60 wird ebenso wie für den Quecksilber-Ionenaustausch 46 ein Kationenaustauscherharz verwendet, das für Quecksilber selektiv ist und das, nachdem seine Kapazität erschöpft ist, erneuert wird. Das Hg-haltige Harz 47 bzw. 47' wird dann einer entsprechenden Regeneration oder thermischen Aufbereitung zugeführt.

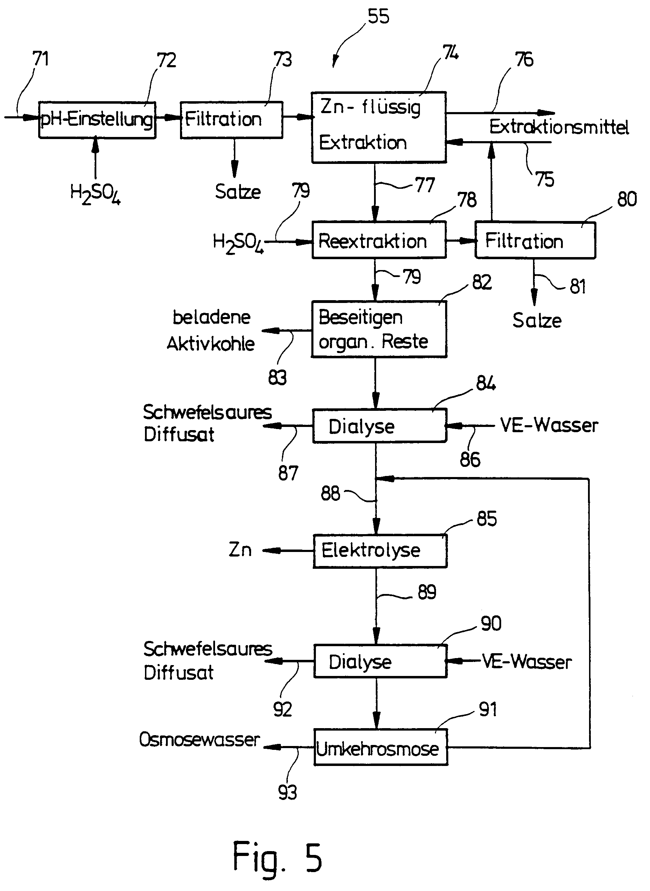

Die Hg-freie, saure, zweite Lösung 61 wird, wie in Fig. 4 dargestellt, anschließend einem Kupfer-Ionenaustausch 62 in der zweiten Abtrennung 54 zugeführt.

Für den Kupfer-Ionenaustausch 62 wird ein Kationenaustauscher verwendet, der Kupfer-Ionen selektiv austauscht. Bei seiner Regeneration entsteht ein mit Kupfersulfat stark angereichertes Eluat 63, aus dem in einer Elektrolyse 64 Kupfer abgeschieden wird. Die durch die Elektrolyse 64 entstandene saure, kupfersulfatabgereicherte Lösung 65 wird über eine Dialyse 66 und eine anschließende Umkehrosmose 67 so weit aufkonzentriert, daß eine kupfersulfathaltige Lösung 68 mit einer für die Elektrolyse 64 geeigneten Konzentration entsteht, die gemeinsam mit dem Eluat 63 wieder der Elektrolyse 64 zugeführt wird.

Dieser Kreislauf aus Elektrolyse 64, Dialyse 66 und Umkehrosmose 67, dem für die Dialyse 66 vollentsalztes Wasser zugeführt werden muß, liefert neben dem elektrolytisch abgeschiedenen Kupfer schwefelsaures Diffusat 69, und aus der Umkehrosmose 67 Osmosewasser 70. Sowohl das schwefelsaure Diffusat 69 als auch das Osmosewasser 70 werden in dem beschriebenen Verfahren weiter verwendet.

Die den Kupfer-Ionenaustausch 62 verlassende Lösung 71, die nun Hg- und Cu-frei ist, wird der in Fig. 5 dargestellten dritten Abtrennung 55 zugeführt.

Die Lösung 71 wird nach einer pH-Einstellung 72 mittels Säure und nach einer Filtration 73, bei der die ausfallenden Salze abgetrennt und der bipolaren Elektrodialyse zugeführt werden, einer flüssig/flüssig-Extraktion 74 zugeführt. Für die flüssig/flüssig-Extraktion 74 wird ein organisches Extraktionsmittel 75 mit Selektiv-Phase zugeführt und mit der zu verarbeitenden Lösung in einer mehrstufigen, vorzugsweise dreistufigen Mixer-Settler-Einheit verwirbelt. Dabei werden Zink-Ionen aus der Lösung abgetrennt, die dann als Lösung 76 zur vierten Abtrennung 56 zum Abtrennen von Nickel und Cadmium weitergeleitet wird.

Eine bei der flüssig/flüssig-Extraktion 74 entstehende, zinkangereicherte Lösung 77 kann nach einer Reextraktion 78, für die eine Säure 78 verwendet wird und in der die Zink-Ionen in eine saure Lösung 79 überführt werden, über eine Filtration 80 zum Abfiltrieren der ausfallenden Salze 81 wieder der flüssig/flüssig-Extraktion 74 zugeführt werden. Die Lösung 79 wird nach dem Beseitigen 82 der organischen Extraktionsmittelreste, bei dem beladene Aktivkohle 83 entsteht und abgeführt wird, über eine Dialyse 84 einer Elektrolyse 85 zugeführt.

Bei der Dialyse 84, bei der vollentsalztes Wasser 86 verwendet wird, und bei der ein schwefelsaures Diffusat 87 entsteht, wird der pH-Wert der der Elektrolyse zugeführten Lösung 88 eingestellt.

Nach der Abtrennung von Zink durch die Elektrolyse 85 wird die nur noch wenige Zink-Ionen enthaltende Lösung 89 über eine weitere Dialyse 90 und eine Umkehrosmose 91 wieder aufkonzentriert und gemeinsam mit der Lösung 88 aus der Dialyse 84 wieder der Elektrolyse 85 zugeführt.

Hierdurch wird ein Elektrolysekreislauf 85, 90, 91 geschaffen, bei dem durch eine sinnvolle Verschaltung der Dialyse 90 und der Umkehrosmose 91 mit der Elektrolyse 85 zur Abtrennung von Zink ein kontinuierlicher Betrieb der Elektrolyse 85 im optimalen Arbeitsbereich ermöglicht wird. Das bei der Dialyse 90 anfallende schwefelsaure Diffusat 92, das bei der Umkehrosmose 91 anfallende Osmosewasser 93 sowie das bei der Dialyse 84 anfallende schwefelsaure Diffusat 87 werden nach einer entsprechenden Aufbereitung wiederum in dem Verfahren eingesetzt.

Das mit der Elektrolyse 85 gewonnene Zink liegt in hochwertiger Form vor.

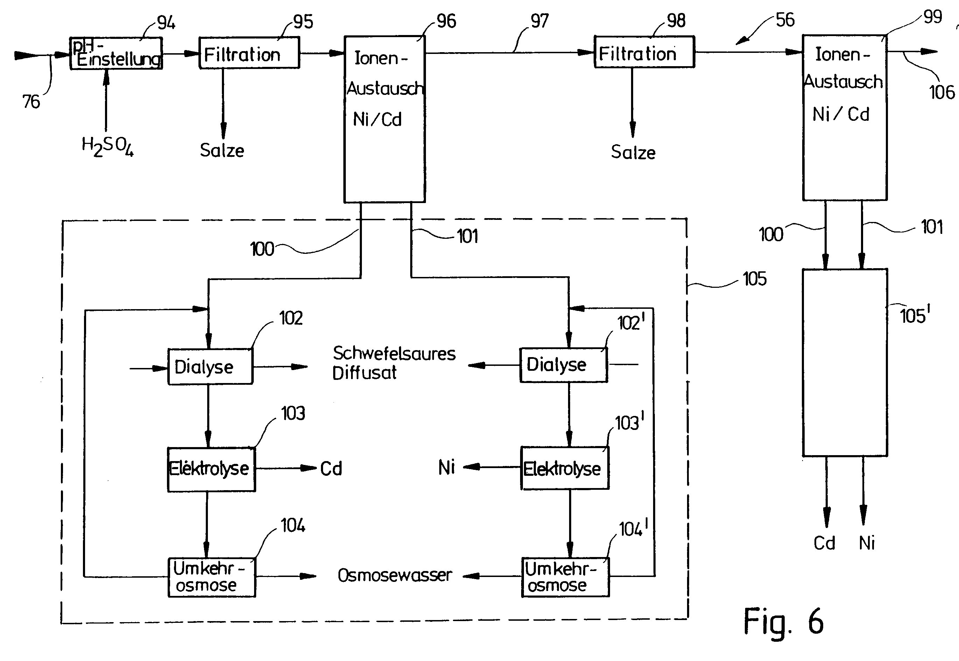

Wie Fig. 6 zeigt, wird die nunmehr Hg-, Cu- und Zn-freie Lösung 76 über eine pH-Einstellung 94 mittels Säure und eine Filtration 95 zum Abfiltrieren ausfallender Salze einem ersten Ionenaustausch 96 zum Abtrennen von Nickel und Cadmium zugeführt. Die den ersten Ionenaustausch 96 verlassende Lösung 97 gelangt dann über eine weitere Filtration 98 zum Abfiltrieren ausfallender Salze zu einem zweiten Ionenaustausch 99, der in entsprechender Weise durchgeführt wird, wie der erste Ionenaustausch 96 zum Abtrennen von Nickel und Cadmium. Bei dem Ionenaustausch 96, 99 werden unter geeigneten Prozeßbedingungen selektiv Nickel- und Cadmium-Ionen ausgetauscht. Die Regeneration des Ionenaustauschharzes mit Säure liefert dann ein cadmiumangereichertes Eluat 100 und ein weiteres, mit Nickel angereichertes Eluat 101. Die Eluate 100, 101 werden jeweils in einem Elektrolyse-Kreislauf aus Dialyse 102, 102', Elektrolyse 103, 103' und Umkehrosmose 104, 104' zugeführt, wobei elektrolytisch Cadmium bzw. Nickel abgeschieden wird. Das bei der Dialyse 102, 102' entstehende schwefelsaure Diffusat und das bei der Umkehrosmose 104, 104' entstehende Osmosewasser werden wiederum im Verfahren weiterverwendet.

Die Elektrolyse-Kreisläufe 102, 103, 104; 102', 103', 104' bilden somit eine Ni/Cd-Abtrennstufe 105, die mit einer entsprechenden Ni/Cd-Abtrennstufe 105' für den zweiten Ionenaustausch 99 identisch ist. Die vierte Abtrennung 56 bildet also eine mehrstufige Ionenaustauscheinheit zum Abtrennen von Nickel und Cadmium, wobei die einzelnen Abtrennstufen 96, 105; 99, 105' identisch aufgebaut sind.

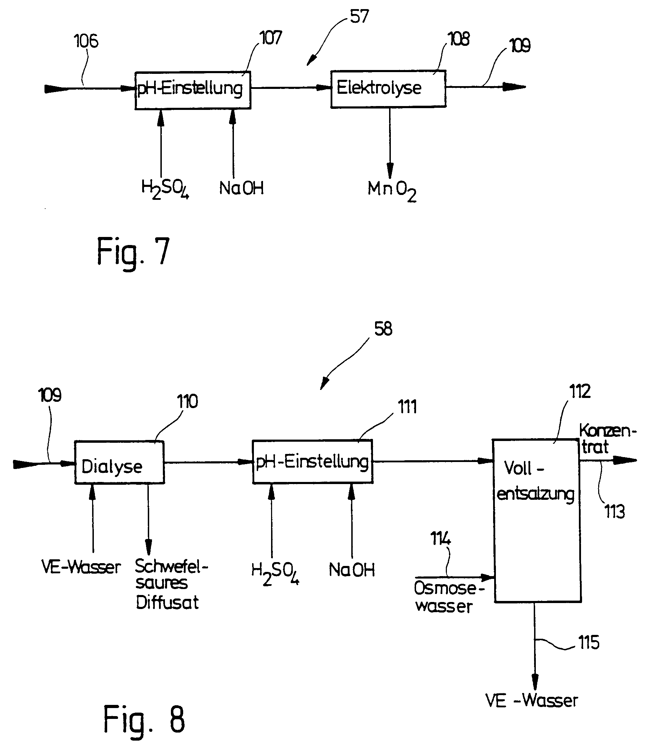

Die von der vierten Abtrennung 56 gelieferte, Hg-, Cu-, Zn-, Ni- und Cd-freie Lösung 106 wird daraufhin, wie in Fig. 7 dargestellt, über eine pH-Einstellung 107 mittels Säure und/oder Lauge an eine Elektrolyse 108 zum Abtrennen von Mangandioxyd weitergeleitet. Bei der Elektrolyse 108 läßt sich durch eine geeignete Verfahrensführung, MnO₂ (Braunstein) in sehr hoher Qualität abscheiden. Hierzu ist insbesondere eine geeignete Einstellung des pH-Wertes der der Elektrolyse zugeführten Lösung auf z.B. 1,5 sowie eine Durchführung der Elektrolyse 108 bei einer Temperatur von etwa 75°C bis 90°C erforderlich.

Die die Elektrolyse 108 verlassende Lösung 109, die von MnO₂, Quecksilber-, Kupfer-, Nickel- und Cadmium-Ionen befreit ist, wird dann zur Aufarbeitung der Restsalzfracht der sechsten Abtrennung 58 zugeführt.

Da die Lösung 109 nur eine geringe Restsalzkonzentration aufweist, wird diese zunächst mittels einer Dialyse 110 aufkonzentriert und über eine pH-Einstellung 111 mittels Säure und/oder Lauge einer Vollentsalzung 112 zugeführt. diese Vollentsalzung 112 wird zweistufig ausgeführt, indem in einer ersten Stufe in einem Kationenaustauscher die in der Lösung verbliebenen Schwermetallionen abgetrennt werden, während in einer zweiten Stufe mittels einer Elektrodialyse mit bipolaren Membranen die verbleibenden Alkalisalze in die konjugierende Säure und Base aufgespalten werden. Die Vollentsalzung 112 verlassen zum einen die Regenerationslösung 113 des Kationenaustauschers mit dem Konzentrat der restlichen Schwermetallionen, wie z.B. Fe-, Al-, Ca-, Mg-Ionen, und zum anderen ein Säure- und ein nicht dargestellter Säure- und Basestrom, welche im Verfahren wiederverwendet werden können. Die Vollentsalzung, der neben der aufkonzentrierten und pH-eingestellten Lösung 109' auch die Osmosewässer 114 aus den einzelnen Umkehrosmosen des Verfahrens zugeführt werden, liefert vollentsalztes Wasser 115, das in den verschiedenen Verfahrensschritten des beschriebenen Verfahrens wiederverwertet werden kann.

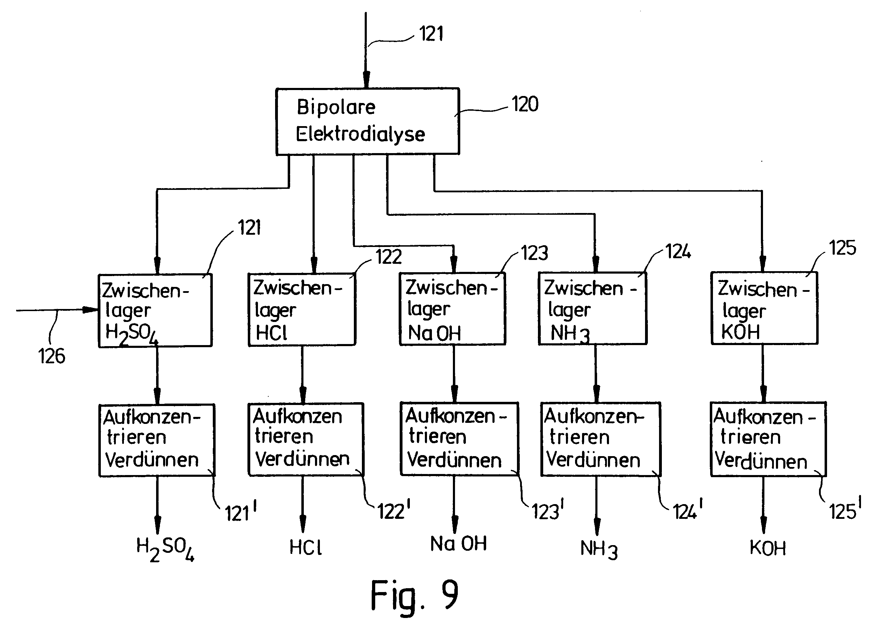

Der in Fig. 9 dargestellten bipolaren Elektrodialyse 120, die mit bipolaren Membranen arbeitet, werden die Salze der einzelnen Filtrationen, wie die den Ionenaustauscher 49 (Fig. 2) verlassende Salzlösung, sowie das bei der NH₃-Abtrennung gewonnene (NH₄)₂SO₄ über ihren Zulauf 121 zugeführt und in ihre konjugierenden Säuren und Laugen aufgespalten. Die einzelnen Stoffe werden dabei in Zwischenlagern 121, 122, 123, 124 und 125 gelagert und können aus diesen über ein entsprechendes Aufkonzentrieren bzw. Verdünnen 121', 122', 123', 124', 125' entnommen werden, um entweder im beschriebenen Verfahren weiterverwendet oder vermarktet zu werden.

Das bei den einzelnen Dialyseschritten erhaltene schwefelsaure Diffusat wird über einen Zulauf 126 direkt dem Zwischenlager 121 für Schwefelsäure zugeführt.

Durch die Verwendung der bipolaren Elektrodialyse 120 bei dem beschriebenen Verfahren wird es ermöglicht, die in dem Verfahren z.B. zur pH-Einstellung benötigten Säuren und Laugen ebenso wie das durch die Vollentsalzung 112 gewonnene vollentsalzte Wasser im Verfahrenskreislauf zu führen.

## Patentansprüche

1. Verfahren zur Rückgewinnung von Rohstoffen aus vorsortiert gesammeltem, verbrauchtem Gut, insbesondere aus verbrauchten elektrochemischen Batterien und Akkumulatoren, bei dem das Gut (10) mechanisch aufbereitet und in wenigstens eine Grob- und eine Feinfraktion (15, 16) aufgeteilt wird, die getrennt voneinander weiterverarbeitet werden, dadurch gekennzeichnet, daß in einer naßchemischen Aufbereitung aus der Feinfraktion (16) zurückzugewinnende Stoffe schrittweise mit einem ersten und einem zweiten Lösungsmittel herausgelöst und anschließend nacheinander aus den beiden Lösungen einzeln zurückgewonnen werden.

2. Verfahren nach Anspruch 1,
bei dem aus dem gesammelten Gut (10) Fremdmaterialien aussortiert werden, und bei dem das sortierte Gut (12) vor der mechanischen Aufbereitung vorzugsweise durch Kühlen versprödet wird.

3. Verfahren nach Anspruch 2,
bei dem das sortierte Gut (12) mittels verflüssigtem Gas, insbesondere flüssigem Stickstoff, gekühlt wird.

4. Verfahren nach Anspruch 2 oder 3,
bei dem das sortierte Gut (10) auf -100°C bis -200°C abgekühlt wird.

5. Verfahren nach Anspruch 2, 3 oder 4,
bei dem das sortierte und versprödete Gut vorzugsweise durch Schreddern und/oder Prallen mechanisch zerkleinert wird.

6. Verfahren nach Anspruch 5,
bei dem das sortierte und versprödete Gut bei tiefen Temperaturen mechanisch zerkleinert wird.

7. Verfahren nach einem der vorhergehenden Ansprüche,
bei dem die Aufteilung in eine Grob- oder Schrottfraktion (15) und in eine Feinfraktion (16) durch Sieben (14) erfolgt.

8. Verfahren nach einem der vorhergehenden Ansprüche,
bei dem die Grob- oder Schrottfraktion (15) vorzugsweise mit Wasser, insbesondere mit vollentsalztem Wasser gewaschen (22) wird.

9. Verfahren nach Anspruch 7 oder 8,
bei dem aus der Grob- oder Schrottfraktion vorzugsweise nach dem Waschen (22) relativ leichte Bestandteile, wie z.B. Karton und Kunststoffe (24) durch Windsichten (23) entfernt werden.

10. Verfahren nach Anspruch 7, 8 oder 9,
bei dem aus der gewaschenen und von relativ leichten Bestandteilen befreiten Grob- oder Schrottfraktion mittels Magnetabscheidung (25) und Buntmetallabtrennung metallische Rohstoffe (26, 27) gewonnen werden.

11. Verfahren nach einem der Ansprüche 7 bis 10,
bei dem aus der Feinfraktion (16) vor der naßchemischen Aufbereitung (21) magnetische Materialien durch Magnetabscheidung (17) entfernt werden.

12. Verfahren nach Anspruch 11,
bei dem die von magnetischen Materialien befreite Feinfraktion, insbesondere das Elektrolytmaterial (18) von elektrochemischen Batterien und Akkumulatoren, in ein Pulver (20) mit vorbestimmter Korngrößenverteilung zerkleinert (19) wird.

13. Verfahren nach einem der vorhergehenden Ansprüche,
bei dem durch Zugabe eines ersten Lösungsmittels, vorzugsweise vollentsalztes Wasser, zur Feinfraktion (20) eine erste Suspension (29) aus erster Lösung (32) und im ersten Lösungsmittel nicht löslichen Feststoffen (33) gebildet wird, der vorzugsweise das beim Waschen (22) der Grob- oder Schrottfraktion (15) anfallende Waschwasser (30) zugegeben wird,
bei dem die erste Lösung (32) von den nichtlöslichen Feststoffen (33) der ersten Suspension getrennt (31) wird,
bei dem die aus der ersten Lösung abgetrennten Feststoffe mit einem zweiten Lösungsmittel, vorzugsweise einer Säure, insbesondere verdünnte Schwefelsäure, gemischt werden, wobei eine zweite Suspension (54) aus einer zweiten Lösung (52) und im zweiten Lösungsmittel nicht löslichen Feststoffen (57) gebildet wird,
bei dem die Feststoffe (57) aus der zweiten Suspension (54) abgetrennt (53) werden, und bei dem die beiden Lösungen (32, 52) einzeln weiterverarbeitet werden, um darin gelöste rückzugewinnende Stoffe daraus abzutrennen.

14. Verfahren nach Anspruch 13,
bei dem der als zweiten Lösungsmittel dienenden verdünnten Schwefelsäure Schwefeldioxyd beigefügt wird, um Braunstein (MnO₂) zu lösen.

15. Verfahren nach Anspruch 13 oder 14,
bei dem aus jeder Lösung (32, 52) vorzugsweise mittels eines ersten Ionenaustausches (46; 53, 60) Quecksilber-(Hg)-Ionen abgetrennt werden und bei dem aus jeder Lösung anschließend in wenigstens einem weiteren Verfahrensschritt, vorzugsweise einem Ionenaustausch (49; 62, 96, 99) weitere Schwermetall-Ionen abgetrennt werden.

16. Verfahren nach Anspruch 15,
bei dem vor der Abtrennung der Hg-Ionen der pH-Wert jeder der beiden Lösungen (32, 52) eingestellt wird.

17. Verfahren nach Anspruch 13, 14 oder 15,
bei dem die erste Lösung (32) nach dem Abtrennen (31) aus der ersten Suspension (29) zwischengelagert (34) wird.

18. Verfahren nach einem der Ansprüche 15, 16 oder 17,
bei dem aus der ersten Lösung (32) durch Strippen (35) vorzugsweise Ammoniak (NH₃) abgetrennt und Salze ausgefällt werden,
und bei dem die ausgefällten Salze abfiltriert und den aus der ersten Suspension (29) abgetrennten Feststoffen (33) zugeführt werden.

19. Verfahren nach einem der Ansprüche 16 bis 18,
bei dem nach der pH-Werteinstellung (42) aus der ersten Lösung (32, 41) Salze (44) abfiltriert (43) werden, die einer vorzugsweise bipolaren Elektrodialyse (120) unterzogen werden, wobei die Salze (44) in ihre konjugierenden Säuren und Laugen aufgetrennt werden.

20. Verfahren nach einem der Ansprüche 15 bis 18,
bei dem nach dem Abtrennen der Hg-Ionen aus der ersten Lösung diese in einem Ionenaustausch (49) von den restlichen Kationen befreit wird, wobei chloridische Salze der nicht ausgetauschten Alkalimetalle von Schwermetallsulfaten getrennt werden, und bei dem die chloridischen Salze (50) einer bipolaren Elektrodialyse (120) zugeführt werden, während die Schwermetallsulfate der zweiten Lösung (52) zugeführt werden.

21. Verfahren nach einem der Ansprüche 15 bis 20,
bei dem aus der Hg-Ionenfreien zweiten Lösung in einer Vielzahl von aufeinander folgenden Abtrennschritten (54, 55, 56, 57) nacheinander die einzelnen Schwermetalle, insbesondere Kupfer, Zink, Nickel und Cadmium, sowie Mangandioxyd gewonnen werden, und bei dem anschließend die verbleibende zweite Lösung (109) vollentsalzt (112) wird.

22. Verfahren nach Anspruch 21,
bei dem nach der Abtrennung von Cu-Ionen der pH-Wert der jeweils verbleibenden zweiten Lösung vor jedem folgenden Abtrennschritt (55, 56, 57, 58) in geeigneter Weise eingestellt (72, 94, 107, 11) wird.

23. Verfahren nach Anspruch 22,
bei dem nach einer pH-Einstellung (72, 94) die jeweilige zweite Lösung gegebenenfalls einer Filtration (73, 95) unterzogen wird, und bei dem die dabei abgetrennten Salze der bipolaren Elektrodialyse (120) zugeführt werden.

24. Verfahren nach Anspruch 21, 22 oder 23,
bei dem in den Abtrennschritten (54, 55, 56) zur Schwermetallgewinnung jeweils eine mit einem bestimmten Schwermetall-Ion angereicherte Lösung (63, 79, 100, 101) erzeugt wird, aus der das entsprechende Schwermetall durch Elektrolyse (64, 85, 103, 103') gewonnen wird.

25. Verfahren nach Anspruch 24,
bei dem die jeweilige Hg-freie zweite Lösung zur Gewinnung von Cu bzw. Ni und Cd einem selektiven Kationenaustausch (62 bzw. (96, 99) zugeführt wird, mittels dessen eine mit Cu- bzw. eine mit Ni- und eine mit Cd-Ionen angereicherte Lösung (63 bzw. 100 bzw. 101) erzeugt wird.

26. Verfahren nach Anspruch 25,
bei dem die entsprechende, Hg-freie zweite Lösung zur Abtrennung von Ni- und Cd-Ionen einem zweistufigen Kationenaustausch (96, 99) zugeführt wird, wobei die den ersten Kationenaustausch verlassende Lösung (97) vor Zuführung zum zweiten Kationenaustausch (99) filtriert (98) wird, um ausgefällte Salze aus der Lösung (91) zu entfernen.

27. Verfahren nach Anspruch 24, bei dem die Hg-freie und Cu-freie zweite Lösung (71) zur Gewinnung von Zink einer vorzugsweise mehrstufigen flüssig/flüssig-Extraktion (74) zugeführt wird, um eine mit Zink-Ionen angereicherte Lösung (77) zu erzeugen.

28. Verfahren nach Anspruch 27,
bei dem aus der unmittelbar aus der flüssig/flüssig-Exktraktion (75) gewonnenen, mit Zn-Ionen angereicherten Lösung (77) durch Reextraktion (78) die Zn-Ionen in eine saure Lösung (79) überführt werden, die nach dem Beseitigen (82) von organischen Resten des Extraktionsmittels (75) und nach einer pH-Einstellung durch Dialyse (84) der Elektrolyse (85) zugeführt wird.

29. Verfahren nach einem der Ansprüche 24 bis 28,
bei dem die die jeweiligen Schwermetall-Ionen in verminderter Konzentration enthaltende, die Elektrolyse (64, 85, 103, 103') verlassende Lösung über Dialyse (66, 90) und/oder Umkehrosmose (67, 91, 104, 104') aufkonzentriert wird und gemeinsam mit der mit Schwermetallionen angereicherten Lösung (63, 68, 100, 101) wieder der Elektrolyse (64, 85, 103, 103') zugeführt wird.

30. Verfahren nach einem der Ansprüche 21 bis 29,
bei dem die Hg-, Cu-, Zn- sowie Ni/Cd-freie zweite Lösung (106) zur Abtrennung von Braunstein (MnO₂) einer Elektrolyse (108) zugeführt wird.

31. Verfahren nach einem der Ansprüche 21 bis 30,
bei dem die Hg-freie und von bestimmten Schwermetall-Ionen sowie MnO₂ befreite Lösung (109) vorzugsweise durch Dialyse (110) aufkonzentriert, dann in ihrem pH-Wert eingestellt (111) und einer vorzugsweise zweistufigen Vollentsalzung (112) zugeführt wird.

32. Verfahren nach Anspruch 31,
bei dem die Vollentsalzung (112) durch Ionenaustausch zur Abtrennung der verbliebenen Schwermetall-Ionen und eine nachfolgende Elektrodialyse mit bipolaren Membranen zur Aufspaltung der verbliebenen Alkalisalze in konjugierende Säure und Base durchgeführt wird.

33. Verfahren nach einem der Ansprüche 21 bis 32,
bei dem aus der Hg-freien zweiten Lösung (61) die rückzugewinnenden Schwermetalle abgetrennt werden, bevor Braunstein (MnO₂) daraus zurückgewonnen wird, wobei zunächst Cu, dann Zn und anschließend Ni und Cd abgetrennt werden.

## Claims

1. Process for the recovery of raw materials from pre-sorted, collected waste, especially scrap electrochemical batteries and accumulators, where the material (10) is prepared mechanically and subdivided into at least one coarse and one fines fraction (15, 16), for separate further processing, characterised in that any substances that are recoverable from the fines fraction (16) are gradually dissolved out in a wet chemical preparation process by means of a first and a second solvent, and are then recovered separately, one after the other, from the two solvents.

2. Process according to claim 1,
wherein any foreign matter is sorted out from the collected waste (10), and the pre-sorted material (12) is preferably embrittled by cooling prior to the mechanical preparation step.

3. Process according to claim 2,
wherein the pre-sorted material (12) is cooled by means of liquefied gas, especially liquid nitrogen.

4. Process according to claim or 3,
wherein the pre-sorted material (10) is cooled down to -100° Celsius to -200° Celsius.

5. Process according to claim 2, 3 or 4,
wherein the pre-sorted and embrittled material is mechanically disintegrated, preferably by a shredding and/or impact-breaking operation.

6. Process according to claim 5,
wherein the pre-sorted and embrittled material is mechanically disintegrated at low temperatures.

7. Process according to any of the preceding claims,
wherein the step of subdividing the material into a coarse or scrap fraction (15) and a fines fraction (15) is effected by screening (14).

8. Process according to any of the preceding claims,
wherein the coarse or scrap fraction (15) is preferably washed (22) with water, especially with fully demineralised water.

9. Process according to claim 7 or 8,
wherein relatively light-weight components, such as carton or plastics (24) are removed from the coarse or scrap fraction, preferably after the washing process (22), by an air separation step (23).

10. Process according to claim 7, 8 or 9,
wherein metallic raw materials (26, 27) are recovered from the coarse or scrap fraction, after the washing seep and removal of its relatively light-weight components, by means of magnetic separation (25) and non-ferrous metal separation.

11. Process according to any of claims 7 to 10,
wherein prior to the wet chemical preparation step (21), any magnetic materials are removed from the fines fraction (16) by magnetic separation (17).

12. Process according to claim 11,
wherein after removal of any magnetic materials from the fines fraction the latter, and in particular any electrolytic material (18) from electrochemical batteries and accumulators, is disintegrated and reduced to a powder (20) of predetermined grain size distribution (19).

13. Process according to any of the preceding claims,
comprising the steps of adding a first solvent, preferably fully demineralised water, to the fines fraction (20) to form a first suspension (29) consisting of the first solution (32) and any solid matter (33) that is insoluble in the first solvent, and adding thereafter preferably the washings (30) from the washing step (22) of the coarse or scrap fraction (15),
separating (31) the first solution (32) from the insoluble solid matter (33) of the first suspension,
mixing the solid matter separated from the first solution with a second solvent, preferably an acid, especially dilute sulphuric acid,
whereby a second suspension (54) is formed from a second solution (52) and solid matter (57) that is insoluble in the second solvent,
separating (53) the solid matter (57) from the second suspension (54), and
processing thereafter the two solutions (32, 52) separately one from the other in order to separate therefrom any dissolved substances that are to be recovered.

14. Process according to claim 13,
wherein sulphur dioxide is added to the dilute sulphuric acid that serves as the second solvent, in order to dissolve any battery manganese (MnO₂).

15. Process according to claim 13 or 14,
wherein mercury (Hg) ions are separated from each solution (32, 52), preferably by means of a first ion exchange step (46; 53, 60), and any other heavy metal ions are separated thereafter from each solution, by at least one further process step, preferably an ion exchange step ( 49; 62, 96, 99).

16. Process according to claim 15,
wherein the pH value of each of the two solutions (32, 52) is adjusted prior to the Hg ion separation step.

17. Process according to claim 13, 14 or 15,
wherein the first solution (32) is stored temporarily (34) after it has been separated (31) from the first suspension (29).

18. Process according to any of claims 15, 16 or 17,
wherein preferably ammonia (NH₃) is separated, and salts are precipitated from the first solution (32) by stripping (35), and
the precipitated salts are filtered off and added to the solid matter (33) separated from the first suspension (29).

19. Process according to any of claims 16 to 18,
wherein any salts (44) are filtered off (43) the first solution (32, 41) after adjustment of the pH value, and are subjected to a preferably bipolar electrodialysis step (120), whereby the salts (44) are split up into their conjugating acids and lyes.

20. Process according to any of claims 15 to 18,
wherein any residual cations are removed from the first solution, by an ion exchange step (49), after separation of the Hg ions from the first solution, whereby any chloridic salts of the non-exchanged alkali metals are separated from any heavy metal sulphates, and the chloridic salts (50) are subjected to a bipolar electrodialysis step (120), whereas the heavy metal sulphates are added to the second solution (52).

21. Process according to any of claims 15 to 20,
wherein the different heavy metals, especially copper, zinc, nickel and cadmium, as well as manganese dioxide, are successively recovered from the second solution, which is free from Hg ions, by a plurality of successive separation steps (54, 55, 56, 57), and thereafter the remaining second solution (109) is fully demineralised (112).

22. Process according to claim 21,
wherein the pH value of the remaining second solution is adjusted (72, 94, 107, 11) in a suitable way, after separation of any Cu ions and prior to each successive step (55, 56, 57, 58).

23. Process according to claim 22,
wherein the respective second solution is subjected, if necessary, to a filtration step (73, 95), after each pH adjustment (72, 94), and the salts, that have been separated out during any such step, are subjected to a bipolar dialysis step (120).

24. Process according to claim 21, 22 or 23,
wherein during each of the separation steps (54, 55, 56) aimed at recovering heavy metals, a solution enriched with a particular heavy metal ion (63, 79, 100, 101) is produced, from which the respective heavy metal is then recovered by electrolysis (64, 85, 103, 103').

25. Process according to claim 24,
wherein, for recovering Cu and/or Ni and Cd, the respective Hg-free second solution is subjected to a selective cation exchange step (62 or 96, 99), by means of which a solution (63 or 100 or 101) is produced that is enriched with Cu or Ni or Cd ions.

26. Process according to claim 25,
wherein for separating Ni and Cd ions, the respective Hg-free second solution is subjected to a two-stage cation exchange process (96, 99), with the solution (97) leaving the first cation exchange stage being filtered (98), prior to being subjected to the second cation exchange step (99), in order to remove any precipitated salts from the solution (97).

27. Process according to claim 24,
wherein for recovering zinc, the second solution (71), being free from Hg and Cu, is subjected preferably to a multi-stage liquid/liquid extraction process (74), in order to produce a solution (77) that is enriched with zinc ions.

28. Process according to claim 27,
wherein the Zn ions from the Zn ion enriched solution (77), obtained directly from the liquid/liquid extraction step (75), are reduced by reextraction (78) to an acid solution (79) which is subjected to electrolysis (85), after removal (82) of any organic residues of the extraction agent (75) and after adjustment of the pH value by dialysis (48).

29. Process according to any of claims 24 to 28,
wherein the solution containing the respective heavy metal ions in reduced concentration and leaving the electrolysis step (64, 85, 103, 103') is upgraded by dialysis (66, 90) and/or reverse osmosis (67, 91, 104, 104') and is then subjected to another electrolysis step (64, 65, 103, 103') jointly with the solution (63, 86, 100, 101) that has been enriched with heavy metal ions.

30. Process according to any of claims 21 to 29,
wherein the second solution (106), being free from Hg, Cu, Zn and Ni/Cd, is subjected to an electrolysis step (108), for separating out any battery manganese (MnO₂).

31. Process according to any of claims 21 to 30,
wherein the solution (109), which is free from Hg and from which specific heavy metal ions as well as MnO₂ have been removed, is upgraded, preferably by dialysis (110), then adjusted as regards its pH value (111) and subjected to a preferably two-stage full demineralisation process (112).

32. Process according to claim 31,
wherein the full demineralisation step (112) is effected by an ion exchange process for separating out the remaining heavy metal ions, and is then subjected to subsequent electrodialysis with bipolar membranes for splitting up the remaining alkali salts into their conjugating acid and base components.

33. Process according to any of claims 21 to 32,
wherein the heavy metals to be recovered are separated from the Hg-free second solution (61) before any battery manganese (MnO₂) is recovered from the solution, the order in which the heavy metals are separated being Cu, then Zn and thereafter Ni and Cd.

## Revendications

1. Procédé de récupération de matières premières provenant de produits usagés, collectés et prétriés, notamment de piles électrochimiques et d'accumulateurs usagés, dans lequel le produit (10) est traité mécaniquement et séparé dans au moins une fraction grossière et une fraction fine (15, 16) qui seront traités séparément, caractérisé en ce que dans le traitement chimique à voie humide les matières à récupérer de la fraction fine (16) sont extraites progressivement avec un premier et un deuxième solvant et ensuite récupérées individuellement successivement des deux solutions.

2. Procédé selon la revendication 1,
dans lequel des matières étrangères sont extraites du produit collecté (10) et dans lequel le produit trie (12) est de préférence fragilisé par refroidissement avant le traitement mécanique.

3. Procédé selon la revendication 2,
dans lequel le produit trié (12) est refroidi au moyen de gaz liquéfié, en particulier de l'azote liquéfié.

4. Procédé selon la revendication 2 ou 3,
dans lequel le produit trié (10) est refroidi à -100 °C à -200 °C.

5. Procédé selon la revendication 2, 3 ou 4,
dans lequel le produit trié et fragilisé est de préférence broyé mécaniquement par découpage en bandes et mise en paquets et/ou détachement par percussion.

6. Procédé selon la revendication 5,
dans lequel le produit trié et fragilisé est broyé mécaniquement à de basses températures.

7. Procédé selon l'une des revendications précédentes,
dans lequel la séparation dans une fraction grossière ou de ferrailles (15) et dans une fraction fine (16) par filtrage (14).

8. Procédé selon l'une des revendications précédentes,
dans lequel la fraction grossière ou de ferrailles (15) est de préférence lavée à l'eau (22), en particulier à l'eau déminéralisée.

9. Procédé selon la revendication 7 ou 8,
dans lequel les composants relativement légers, tels que par exemple du carton et des matières synthétiques (24), sont enlevés par élutriation (23) de préférence après le lavage (22).

10. Procédé selon la revendication 7, 8 ou 9,
dans lequel à partir de la fraction grossière ou de ferrailles libérée des composants relativement légers, des matières premières métalliques (26, 27) sont récupérées au moyen de séparation magnétique (25) et de détachement des métaux lourds non-ferraux (26, 27).

11. Procédé selon l'une des revendications 7 à 10,
dans lequel des matériaux magnétiques sont, avant le traitement chimique à voie humide (21), enlevés de la fraction fine par séparation magnétique (17).

12. Procédé selon la revendication 11,
dans lequel la fraction fine libérée des matériaux magnétiques, particulièrement le matériel électrolytique (18) de piles et d'accumulateurs électrochimiques, est broyée (19) en une poudre (20) d'une répartition granulométrique prédéterminée.

13. Procédé selon l'une des revendications précédentes,
dans lequel, par addition d'un premier solvant, particulièrement d'eau déminéralisé, à la fraction fine (20) une première suspension (29) est formée de la première solution (32) et des matières solides (33) solubles, à laquelle est ajoutée de préférence l'eau de lavage (30) résultant du lavage (22) de la fraction grossière ou de ferrailles (15),
dans lequel la première solution (32) est séparée des matières solides (33) non solubles de la première suspension (31),
dans lequel les matières solides séparées de la première solution sont mélangées avec un deuxième solvant, de préférence un acide,
particulièrement de l'acide sulfurique, une deuxième suspension (54) étant formée d'une deuxième solution (52) et des matières solides (57) non solubles dans le deuxième solvant (52),
dans lequel les matières solides (57) sont séparées (53) de la deuxième suspension (54), et
dans lequel les deux solutions (32, 52) sont ensuite traitées séparément, pour en extraire des matières y dissoutes à récupérer.

14. Procédé selon la revendication 13,
dans lequel du dioxyde de sulfure est ajouté à l'acide sulfurique, utilisé comme deuxième solvant, pour dissoudre l'ankérite (Mn O₂).

15. Procédé selon la revendication 13 ou 14,
dans lequel des ions de mercure (Hg) sont extraits de chaque solution (32, 52) de préférence au moyen d'un premier échange d'ions (46; 53, 60) et dans lequel on extrait ensuite de chaque solution dans au moins une opération, de préférence un échange d'ions (49; 62, 96, 99), d'autres ions de métaux lourds.

16. Procédé selon la revendication 15,
dans lequel la valeur pH de chacune des deux solutions (32, 52) est réglée avant l'extraction des ions Hg.

17. Procédé selon la revendication 13, 14 ou 15,
dans lequel la première solution (32) est stockée temporairement (34) après l'extraction (31) de la première suspension (29).

18. Procédé selon l'une des revendications 15, 16 ou 17,
dans lequel de préférence de l'ammoniac (NH₃) est extrait de la première solution (32) par stripage (35) et des sels en sont précipités, et
dans lequel les sels précipités sont séparés par filtration et amenés aux matières solides (33) extraites de la première suspension (29).

19. Procédé selon l'une des revendications 16 à 18,
dans lequel, après le réglage de la valeur pH (42), des sels (44) sont précipités (43) de la première solution (32, 41) et de préférence soumis à une dialyse bipolaire (120), les sels (44) étant séparés en leurs acides et lessives alcalines conjugués.

20. Procédé selon l'une des revendications 15 à 18,
dans lequel les ions Hg, après leur extraction de la première solution, sont libérés dans un échange d'ions (49) des cations restants, des sels chloriques des métaux alcalins non échangés étant séparés de sulfates de métaux lourds, et dans lequel les sels chloriques (50) sont soumis à une électrodialyse bipolaire (120), alors que les sulfates de métaux lourds sont introduits dans la deuxième solution (52).

21. Procédé selon l'une des revendications 15 à 20,
dans lequel sont extraits de la deuxième solution exempte de ions Hg par le biais de nombreuses opérations successives (54, 55, 56, 57) les différents métaux lourds, particulièrement le cuivre, le zinc, le nickel et le cadmium, ainsi que le dioxyde de manganèse, et dans lequel la deuxième solution restante (109) est ensuite complètement déminéralisée (112).

22. Procédé selon la revendication 21,
dans lequel, après l'extraction des ions Cu, la valeur pH de la deuxième solution restante est réglée (72, 94, 107, 11) de façon adéquate avant chaque opération d'extraction subséquente.

23. Procédé selon la revendication 22,
dans lequel, après un réglage pH (72, 94), la deuxième solution respective est soumise éventuellement à une filtration (73, 95), et dans lequel les sels extraits sont amenés à l'électrodialyse bipolaire (120).

24. Procédé selon la revendication 21, 22 ou 23,
dans lequel une solution enrichie d'un certain on de métal lourd (63, 79, 100, 101) est générée dans les opérations d'extraction (54, 55, 56) pour l'extraction de métaux lourds. De cette solution est ensuite extrait le métal lourd respectif par électrolyse (64, 85, 103, 103').

25. Procédé selon la revendication 24,
dans lequel la deuxième solution exempte de Hg est amenée à un échange de cautions sélectifs pour l'extraction de Cu ou de Ni et de Cd (62) ou (96, 99), au moyen duquel est générée une solution enrichie respectivement de ions Cu ou de ions Ni ou de ions Cd (63 ou 100 ou 101).

26. Procédé selon la revendication 25,
dans lequel la deuxième solution exempte de Hg est amenée à un échange de cations à deux étages (96, 99) pour l'extraction d'ions Ni et d'ions Cd, la solution (97) quittant le premier échange de cations étant filtrée (98) avant l'amenée vers le deuxième échange de cations (99), pour éliminer des sels précipités de la solution (97).

27. Procédé selon la revendication 24,
dans lequel la deuxième solution (71) exempte de Hg et de Cu est amenée vers une extraction liquide - liquide (74) de préférence à étages multiples, pour générer une solution (77) enrichie d'ions de zinc.

28. Procédé selon la revendication 27,
dans lequel les ions Zn sont amenés dans une solution acide (79) par réextraction (78) de la solution (77), enrichie d'ions Zn, directement extraite de l'extraction liquide - liquide (75), la solution acide (79) étant, après élimination (82) de restes organiques de produits d'extraction (75) et après réglage d'une valeur pH, amenée à l'électrolyse (85) par dialyse (84).

29. Procédé selon l'une des revendications 24 à 28,
dans lequel la solution contenant en concentration réduite les ions respectifs de métal lourd et quittant l'électroyse (64, 85, 103, 103') est soumise à une contraction améliorée au moyen d'une dialyse (66, 90) et/ou une osmose inverse (67, 91, 104, 104') et amenée à nouveau avec la solution (63, 68, 100, 101) enrichie d'ions de métal lourd à l'électrolyse (64, 85, 103, 103').

30. Procédé selon l'une des revendications 21 à 29,
dans lequel la deuxième solution exempte de Hg, de Cu, de Zn et de Ni/Cd (106) est amenée à une électrolyse (108) pour l'extraction de l'ankérite (MnO₂).

31. Procédé selon l'une des revendications 21 à 30,
dans lequel la solution (109) exempte de Hg et de certain ions de métal dur ainsi que de MnO₂ est soumise à une concentration améliorée, de préférence par dialyse (110), ensuite réglée sur sa valeur pH (111) et amenée à une déminéralisation complète (112) de préférence à deux étages.

32. Procédé selon la revendication 31,
dans lequel la déminéralisation complète (112) est effectuée par échange d'ions pour l'extraction des ions de métal lourd résiduels et par électrodialyse consécutive avec membranes bipolaires pour la séparation des sels alcalins en acide et base conjugués.

33. Procédé selon l'une des revendications 21 à 32,
dans lequel les métaux lourds à récupérer sont séparés de la deuxième solution (61) exempte de Hg, avant la récupération de l'ankérite (MnO₂), Cu, ensuite Zn et enfin Ni et Cd étant séparés au préalable.
